# EUROPÄISCHE PATENTSCHRIFT

(11) **EP 2 843 585 B1**
(45) Veröffentlichungstag und Bekanntmachung des Hinweises auf die Patenterteilung: **14.08.2019**
(21) Anmeldenummer: 13182745.3
(22) Anmeldetag: 03.09.2013
(51) Int. Cl.: G06F 21/62, G06F 21/60, H04L 29/06

(54) **Verfahren und System zum Bereitstellen von anonymisierten Daten aus einer Datenbank**
Method and system for providing anonymised data from a database
Procédé et système de mise à disposition de données rendues anonymes issues d'une base de données

(43) Veröffentlichungstag der Anmeldung: 04.03.2015
(73) Patentinhaber: Vodafone Kabel Deutschland GmbH, 85774 Unterföhring (DE)
(72) Erfinder: Badstieber, Harald, 85774 Unterföhring (DE); Günther, Daniel, 85774 Unterföhring (DE); Von Knethen, Jens, 85774 Unterföhring (DE); Mertl, Florian, 83043 Bad Aibling (DE); Palai, Viktor, 85774 Unterföhring (DE)
(74) Vertreter: Eisenführ Speiser

(56) Entgegenhaltungen:
- EP-A1- 2 426 617
- WO-A1-01/18631
- WO-A1-02/06948
- WO-A1-2010/124850
- WO-A2-2010/149948
- PAPOTTO L: "Test Data Management Part 2 Data Privacy and Techniques for De-Identifying Test Data", INTERNET CITATION, 2004, XP007901672, Gefunden im Internet: URL:http://www.princetonsoftech.com/Newsle tter/PDF_wn/wn_TDM2_Data%20Privacy_Deident ify.pdf [gefunden am 2007-02-06]
- XINQIANG MA ET AL: "Study on LogicSQL database system in security problems", COMMUNICATION SOFTWARE AND NETWORKS (ICCSN), 2011 IEEE 3RD INTERNATIONAL CONFERENCE ON, IEEE, 27. Mai 2011 (2011-05-27), Seiten 532-536, XP032049985, DOI: 10.1109/ICCSN.2011.6013888 ISBN: 978-1-61284-485-5

## Beschreibung

Die vorliegende Erfindung befasst sich mit der Bereitstellung von anonymisierten Daten in einem Datenbanksystem. Insbesondere betrifft die Erfindung ein Verfahren zum Bereitstellen eines anonymisierten Werts eines mit einem Originalwert in einer Datenbank eines Datenbanksystems gespeicherten Datenelements. Die Erfindung betrifft zudem ein System und ein Computerprogramm zur Durchführung des Verfahrens.

Informationen, die von einem Unternehmen oder einer anderen Organisation zur Ausführung der in dem Unternehmen bzw. der Organisation vorgesehenen Aufgaben benötigt werden, sind in der Regel in Datenbanksystemen gespeichert. So betreiben Unternehmen in der Regel Datenbanksysteme, in denen etwa personenbezogene Informationen von Kunden des Unternehmens gespeichert sind, auf deren Grundlage das Unternehmen beispielsweise Dienstleistungen für seine Kunden ausführt. Die gespeicherten Informationen umfassen dabei häufig auch sensible Daten, insbesondere sensible Personendaten wie etwa Namen, Bankdaten oder dergleichen, die vor unberechtigten Zugriffen geschützt werden müssen.

Für viele Aufgaben, die anhand der gespeicherten Informationen ausgeführt werden, ist der Zugriff auf den genauen Inhalt der in dem Datenbanksystem gespeicherten Informationen einschließlich der sensiblen Daten erforderlich. Gleichfalls kann jedoch beispielsbeispielsweise vorgesehen sein, dass auf der Grundlage der in der Datenbank gespeicherten Informationen statistische Auswertungen vorgenommen werden, die lediglich auf einen Teil der in dem Datenbanksystem gespeicherten Daten angewiesen sind, während viele weitere gespeicherte Informationen für die Auswertungen nicht relevant sind. Weiterhin kann vorgesehen sein, auf der Grundlage der in der Datenbank gespeicherten Informationen Testdaten zu erzeugen, mit denen beispielsweise neue Datenverarbeitungsprozesse getestet werden, bevor sie zur Ausführung im normalen Betrieb in dem Datenbanksystem implementiert werden. Die Testdaten sollten hierbei möglichst große Übereinstimmungen mit den realen Daten aufweisen, es ist jedoch in der Regel nicht erforderlich, die realen Datenwerte in Testläufen zu verarbeiten.

Um die in dem Datenbanksystem gespeicherten sensiblen Daten bei Zugriffen zu Zwecken der zuvor genannten Art, bei denen der Dateninhalt nicht bzw. nur teilweise relevant ist, zu schützen, können anstelle der realen Originalwerte der Datenelemente anonymisierte Werte verwendet werden. Anhand solcher anonymisierten Werte können dann etwa statistische Auswertungen oder Testläufe ausgeführt werden, ohne die realen Originalwerte von sensiblen Datenelementen preisgeben zu müssen.

Die EP 2 426 617 A1 betrifft ein Verfahren zum anonymen Zusammenführen von vertraulichen Merkmalsdaten und zugehörigen Identifizierungsdaten. Bei den Verfahren kann ein Benutzer vertrauliche Merkmalsdaten über Personen einer Merkmalsdatenbank über eine Treuhandstelle zur Auswertung zur Verfügung stellen. Hierzu werden Identifizierungsdaten für Personen beim Benutzer anonymisiert, um daraus eine erste Datensatzkennung zu gewinnen. Sodann wird die erste Datensatzkennung zusammen mit zugefügten Merkmalen der Person an die Treuhandstelle übermittelt, welche die erste Datensatzkennung in eine zweite Datensatzkennung umschlüsselt und die Daten dann an die Merkmalsdatenbank übermittelt.

Aus der WO 2010/124850 geht ein System zum Verwalten und Anzeigen von medizinischen Daten hervor. Das System umfasst eine Datenbank, in der Identifizierungsdaten und medizinische Daten von Patienten in medizinischen Dateien gespeichert werden. Autorisierte Nutzer können auf diese Daten zugreifen. Für den Zugriff nicht autorisierter Nutzer werden die in den medizinischen Dateien enthaltenen Daten teilweise modifiziert. Die Modifikation kann "on-the-fly" während des Zugriffs vorgenommen werden, oder die modifizierte Datei wird im Vorhinein erzeugt und für spätere Zugriffe in der Datenbank gespeichert.

Es ist eine Aufgabe der vorliegenden Erfindung, solche anonymisierten Werte von in einer Datenbank gespeicherten Datenelementen möglichst einfach und effizient bereitzustellen. Insbesondere soll die Möglichkeit, anonymisierte Werte bereitstellen zu können, möglichst einfach in bestehende Datenbanksysteme integriert werden können.

Diese Aufgabe wird durch ein Verfahren nach Anspruch 1, durch ein Computerprogramm nach Anspruch 12 und ein System nach Anspruch 13 gelöst. Ausgestaltungen des Verfahrens, des Computerprogramms und des Systems sind in den abhängigen Ansprüchen angegeben.

Gemäß einem ersten Aspekt schlägt die Erfindung ein Verfahren zum Bereitstellen eines anonymisierten Werts eines mit einem Originalwert in einer Datenbank eines Datenbanksystems gespeicherten Datenelements vor, wobei das Datenelement Bestandteil eines Datensatzes ist, der eine Person betrifft und zudem weitere Datenelemente enthält, die nicht anonymisiert werden. Das Verfahren umfasst folgende Schritte: (i) Erzeugen eines Zusatzdatenelements für das in der Datenbank gespeicherte Datenelement; (ii) Bestimmen des anonymisierten Werts des Datenelements aus dem Originalwert anhand einer in dem Datenbanksystem hinterlegten Abbildungsregel zur Ermittlung anonymisierter Werte und Speichern des anonymisierten Werts in dem Zusatzdatenelement; und (iii) Aufnehmen des Datenelements in den Datensatz und Verknüpfen des Zusatzdatenelements mit dem Datenelement derart, dass aufgrund des Empfangs eines das Datenelement betreffenden Zugriffsbefehls, der von einem mit dem Datenbanksystem verbundenen Benutzer gesendet wird, das Zusatzdatenelement ausgelesen und der darin enthaltene anonymisierte Wert an den Benutzer übermittelt wird. Das Zusatzdatenelement wird dabei unabhängig von dem Empfang eines Zugriffsbefehls erzeugt und mit dem enthaltenen anonymisierten Wert in der Datenbank gespeichert.

Gemäß einem zweiten Aspekt der Erfindung wird ein System zum Bereitstellen eines anonymisierten Werts eines mit einem Originalwert in einer Datenbank eines Datenbanksystems gespeicherten Datenelements vorgeschlagen, wobei das Datenelement Bestandteil eines Datensatzes ist, der eine Person betrifft und zudem weitere Datenelemente enthält, die nicht anonymisiert werden. Für das in der Datenbank gespeicherte Datenelement kann ein Zusatzdatenelement erzeugt werden. Ferner ist das System dazu ausgestaltet, (i) den anonymisierten Wert des Datenelements aus dem Originalwert anhand einer in dem Datenbanksystem hinterlegten Abbildungsregel zur Ermittlung anonymisierter Werte zu bestimmen und den anonymisierten Wert in dem Zusatzdatenelement zu speichern, und (ii) das Zusatzdatenelement in den Datensatz aufzunehmen und derart mit dem Datenelement zu verknüpfen, dass aufgrund des Empfangs eines das Datenelement betreffenden Zugriffsbefehls, der von einem mit dem Datenbanksystem verbundenen Benutzer gesendet wird, das Zusatzdatenelement ausgelesen und der darin enthalten anonymisierten Wert an den Benutzer übermittelt werden kann. Das Zusatzdatenelement wird dabei unabhängig von dem Empfang eines Zugriffsbefehls erzeugt und mit dem enthaltenen anonymisierten Wert in der Datenbank gespeichert.

Zur Bestimmung des anonymisierten Werts und zur Speicherung des anonymisierten Werts in dem Zusatzdatenelement sowie zur Verknüpfung des Zusatzdatenelements mit dem Datenelement ist in einer Ausführungsform der Erfindung eine Anonymisierungseinheit vorgesehen, die optional auch dazu ausgestaltet sein kann, das Zusatzdatenelement zu erzeugen.

Darüber hinaus schlägt die Erfindung gemäß einem weiteren Aspekt ein Computerprogramm vor. Dieses umfasst einen Programmcode, der Befehle enthält, um das erfindungsgemäße Verfahren und/oder Ausgestaltungen des Verfahrens auszuführen, wenn der Programmcode auf einem Prozessor ausgeführt wird.

Ein Vorteil der Erfindung besteht darin, dass der Zugriff auf die anonymisierten Werte aufgrund der bereitgestellten Zusatzdatenelemente in ähnlicher Weise vorgenommen werden kann, wie der Zugriff auf die Originalwerte der Datenelemente. Insbesondere wird auch beim Zugriff auf den anonymisierten Wert ein Datenelement der Datenbank ausgelesen, ohne dass etwa Prozesse zur Erzeugung des anonymisierten Werts in den Zugriffsprozess integriert werden müssen. Ein weiterer Vorteil besteht darin, dass Zugriffe auf die anonymisierten Werte im Wesentlichen ebenso schnell ausgeführt werden können, wie Zugriffe auf die Originalwerte.

In einer Ausführungsform des Verfahrens ist vorgesehen, dass eine Berechtigung des Benutzers für einen Zugriff auf den Originalwert anhand von in dem Datenbanksystem gespeicherten Zugriffsberechtigungsdaten überprüft wird, und der anonymisierte Wert an den Benutzer übermittelt wird, wenn die Prüfung ergibt, dass der Benutzer nicht für einen Zugriff auf den Originalwert berechtigt ist. Eine verbundene Ausgestaltung sieht vor, dass aufgrund eines Empfangs eines weiteren das Datenelement betreffenden Zugriffsbefehls eines weiteren Benutzers der Originalwert des Datenelements an den weiteren Benutzer übermittelt wird, wenn festgestellt wird, dass der weitere Benutzer für den Zugriff auf den Originalwert berechtigt ist.

Zudem stellt die Erfindung in einer Ausgestaltung ein Datenbanksystem bereit, das eine Datenbank sowie das zuvor beschriebenen System umfasst. Zudem beinhaltet das Datenbanksystem eine Verwaltungseinheit, die dazu ausgestaltet ist, aufgrund des Empfangs eines das Datenelement betreffenden Zugriffsbefehls eines Benutzers eine Berechtigung des Benutzers für einen Zugriff auf den Originalwert des Datenelements anhand von in dem Datenbanksystem gespeicherten Zugriffsberechtigungsdaten zu überprüfen, und den anonymisierten Wert an den Benutzer zu übermitteln, wenn die Überprüfung ergibt, dass der Benutzer nicht für einen Zugriff auf den Originalwert berechtigt ist.

Vorteilhaft ermöglichen die zuvor genannten Ausführungsformen, dass in Abhängigkeit von Zugriffsberechtigungsdaten, die in dem Datenbanksystem hinterlegt sind, entweder der Originalwert des Datenelements oder der anonymisierten Wert an einen Benutzer übermittelt werden kann. Die hierzu vorgenommene Berechtigungsprüfung kann dabei in ebenfalls in einfacher Weise in eine Zugriffskontrollfunktion integriert werden, die in bestehenden Datenbanksystemen oftmals bereits eingerichtet ist.

Eine weitere Ausführungsform der Erfindung zeichnet sich dadurch aus, dass die Abbildungsregel aufgrund einer Zuordnung zu dem Datenelement aus einer Mehrzahl von in dem Datenbanksystem hinterlegten Abbildungsregeln zur Ermittlung anonymisierter Werte ausgewählt wird. Hierdurch ist es möglich, anonymisierte Werte für verschiedene Datenelemente anhand unterschiedlicher, an das jeweilige Datenelement angepasster Abbildungsregeln vorzunehmen.

Um zu verhindern, dass aus dem anonymisierten Wert auf den Originalwert des Datenelements geschlossen werden kann, sieht eine Ausführungsform der Erfindung vor, dass die Abbildungsregeln jeweils eine unumkehrbare Abbildung von Originalwerten auf anonymisierte Werte definieren. Hierzu können die Abbildungsregeln insbesondere sogenannte Hash-Funktionen und/oder Zufallsfunktionen umfassen. Hierdurch kann eine besonders guter Schutz von Originalwerten erzielt werden. Gleichfalls kann es jedoch vorgesehen sein, dass einfachere Abbildungsregeln eingesetzt werden, wenn ein geringerer Schutz der Originalwerte ausreichend ist. Hierdurch kann der Rechenaufwand zur Ermittlung von anonymisierten Werten verringert werden.

Weiterhin ist eine Ausgestaltung der Erfindung dadurch gekennzeichnet, dass die Abbildungsregel zur Ermittlung des anonymisierten Werts des Datenelements so ausgestaltet ist, dass der anonymisierte Wert wenigstens eine vorgegebene Eigenschaft des Originalwerts des Datenelements aufweist. Durch eine derartige Abbildungsregel, die eine oder mehrere Eigenschaften des Originalwerts des Datenelements erhält, kann ein anonymisierter Wert ermittelt werden, der in ähnlicher Weise wie der Originalwert des Datenelements verarbeitet werden kann. Weiterhin ist es auf diese Weise möglich, einem Teil des Informationsgehalts des Originalwerts zu erhalten, so dass anhand der anonymisierte Wert etwa statistische Auswertungen vorgenommen werden können, deren Resultate auch für die realen Datenwerte gültig sind, ohne dass der vollständige reale Informationsgehalt preisgegeben wird.

In einer Ausgestaltung ist vorgesehen, dass der anonymisierte Wert eine Zeichenfolge mit einer Länge ist, die in einem vorgegebenen Verhältnis zur Länge der den Originalwert bildenden Zeichenfolge steht. Insbesondere kann vorgesehen sein, dass die den Originalwert und den anonymisierten Wert bildenden Zeichenfolgen gleich lang sind. Weiterhin ist in einer Ausführungsform vorgesehen, dass ein vorgegebener Bestandteil einer den Originalwert bildenden Zeichenfolge in den anonymisierten Wert übernommen wird. Bei diesem Bestandteil kann es sich insbesondere um ein Präfix und/oder Suffix der den Originalwert bildenden Zeichenfolge handeln. Ferner beinhaltet eine Ausgestaltung der Erfindung, dass der Originalwert aus einem vorgegebenen Wertebereich stammt und der zugehörige anonymisierte Wert anhand der ausgewählten Abbildungsregeln aus demselben Wertebereich ausgewählt wird.

Weiterhin kann der Originalwert des Datenelements innerhalb einer Gruppe von Datenelementen genau einmal auftreten. Dies ist beispielsweise der Fall, wenn es sich beim dem Originalwert des Datenelements um einen eindeutigen Identifizierer eines Datensatzes handelt. Für einen solchen Fall sieht eine Ausgestaltung der Erfindung vor, dass der anhand der Abbildungsregeln ermittelte anonymisierte Wert innerhalb einer der Gruppe von Datenelementen zugeordneten Gruppe von Zusatzdatenelementen mit anonymisierten Werten genau einmal auftritt. Hierdurch kann beispielsweise auch der anonymisierte Wert als ein eindeutiger Identifzierer verwendet werden.

Zudem können sensible Informationen, die in dem Datenbanksystem gespeichert sind, Personennamen enthalten. Im Hinblick hierauf beinhaltet eine Ausführungsform der Erfindung, dass es sich bei dem Originalwert des Datenelements und dem anonymisierten Wert um verschiedene Personennamen handelt. Damit ist in dieser Ausführungsform auch der anonymisierte Wert ein Personenname und kann unmittelbar als solcher erkannt und als solcher verarbeitet werden.

Anhand der zuvor genannten Ausgestaltungen ermöglicht die Erfindung die Beibehaltung von Eigenschaften der Originalwerte bei der Erzeugung anonymisierter Werte. In weiteren Ausgestaltungen können Abbildungsregeln jedoch gleichfalls so vorgegeben werden, dass sich bestimmte Eigenschaften von Originalwerten nicht in den anonymisierten Werten wiederfinden, wenn dies gewünscht ist.

Nachfolgend werden Ausführungsbeispiele der Erfindung anhand der beiliegenden Figuren näher erläutert. Von den Figuren zeigt:
- Fig. 1: eine schematische Darstellung eines Datenbanksystems mit einer Datenbank, einer zugehörigen Verwaltungseinheit und einer Anonymisierungseinheit,
- Fig. 2a: eine beispielhafte Darstellung einer Tabelle, die in der Datenbank gespeichert ist, die in der Figur 1 gezeigt wird, mit ergänzten Zusatzdatenelementen,
- Fig. 2b: eine Gestalt, in der in der Figur 2a gezeigte Tabelle mit Originalwerten von schutzwürdigen Datenelementen übertragen wird,
- Fig. 2c: eine Gestalt, in der in der Figur 2a gezeigte Tabelle mit anonymisierten Werten anstelle der Originalwerte der schutzwürdigen Datenelementen übertragen wird,
- Fig. 3: ein schematisches Ablaufdiagramm, in dem die Übermittlung von Werten von Datenelementen an einen Benutzer durch das in der Figur 1 gezeigten Datenbanksystem veranschaulicht ist.

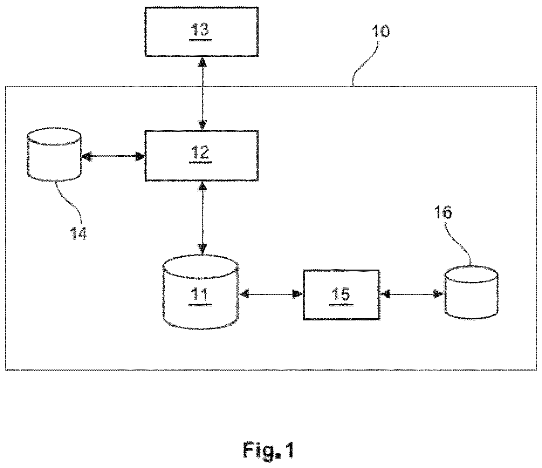

Figur 1 zeigt schematisch ein Datenbanksystem 10 gemäß einem Ausführungsbeispiel der vorliegenden Erfindung. Das Datenbanksystem 10 kann beispielsweise in einem Unternehmen betrieben werden. In diesem Fall, auf den auch nachfolgend beispielhaft Bezug genommen wird, können in dem Datenbanksystem 11 etwa personenbezogene Daten von Kunden des Unternehmens und/oder weitere Daten, die im Betrieb des Unternehmens verwendet werden, gespeichert sein. Die Erfindung ist jedoch keineswegs auf eine solche Ausgestaltung beschränkt. Vielmehr können erfindungsgemäße Datenbanksysteme 10 in vielerlei Anwendungen eingesetzt werden und grundsätzliche beliebige Arten von Daten speichern.

Das Datenbanksystem 10 umfasst eine Datenbank 11, die als ein elektronischer Datenspeicher ausgestaltet ist, in dem Daten innerhalb einer vorgegebenen Datenstruktur in einer dem Fachmann an sich bekannten Art und Weise gespeichert sind. Weiterhin enthält das Datenbanksystem 10 eine Verwaltungseinheit 12, die in einer dem Fachmann ebenfalls an sich bekannten Art und Weise die Speicherung der Daten in der vorgesehenen Datenstruktur organisiert und über die externe Zugriffe auf die in der Datenbank 11 gespeicherten Daten vorgenommen werden. Hierzu umfasst die Verwaltungseinheit 12 ein entsprechendes Softwareprogramm, das auf einem Prozessor des Datenbanksystems 10 ausgeführt wird.

Externe Zugriffe können von Benutzern des Datenbanksystems 10 mithilfe von Benutzergeräten 13 vorgenommen werden, von denen in Figur 1 beispielhaft eines gezeigt ist. Bei den Benutzergeräten 13 handelt es sich um elektronische Datenverarbeitungsgeräte, die beispielsweise über ein in der Figur nicht gezeigtes Datennetz oder in anderer Weise mit dem Datenbanksystem 10 verbunden sind und von den Benutzern des Datenbanksystems 10 gesteuert werden. Hierbei kann es sich um menschliche Bediener handeln oder um selbsttätige Prozesse, die in den Benutzergeräten 13 ausgeführt werden. Sofern das Datenbanksystem 10 wie zuvor beschrieben von einem Unternehmen betrieben wird, kann es sich beispielsweise um die Benutzergeräte 13 von Mitarbeitern des Unternehmens, von Kunden oder von Zulieferern handeln.

Die Daten sind in der Datenbank 11 innerhalb von Datenelementen gespeichert, die entsprechend der für die Datenbank 11 vorgesehenen Datenstruktur angeordnet sind und miteinander verknüpft werden können. Innerhalb der vorgesehenen Datenstruktur sind den Datenelementen jeweils einer oder mehrere Bezeichner zugeordnet, die es insbesondere ermöglichen, die Datenelemente bei externen Zugriffen auf die Datenbank 11 zu adressieren. Dabei können einzelnen oder allen Datenelementen individuelle Bezeichner eindeutig zugeordnet sein. Ferner können Bezeichner vorgegebenen Gruppen von Datenelementen zugeordnet werden, so dass die Datenelemente dieser Gruppe als Ganzes mit einem einzelnen Bezeichner adressiert werden können. Insbesondere die Zuordnung von Bezeichnern zu Gruppen von Datenelementen kann sich dabei aus einer bestimmten Anordnung der betreffenden Datenelemente innerhalb der vorgesehenen Datenstruktur ergeben.

Als Datenstrukturen kommen grundsätzliche beliebige dem Fachmann an sich bekannte, in Datenbanken einsetzbare Datenstrukturen in Betracht. Ein Beispiel für eine Datenstruktur, in der in der Datenbank 11 gespeicherten Datenelemente angeordnet sein können und auf das auch nachfolgend exemplarisch Bezug genommen wird, ist eine Speicherung der Datenelemente in einer oder mehreren Tabellen. Dabei bilden die Datenelemente der Zeilen einer Tabelle jeweils einen sogenannten Datensatz. Die den einzelnen Tabellenspalten zugeordneten Datenelemente eines solchen Datensatzes enthalten die sogenannten Attribute des Datensatzes. Die Namen dieser Attribute, d.h. die Namen der Spalten einer Tabelle, können dabei als Bezeichner für den Zugriff auf die Datenelemente dienen. Ebenso kann ein Name der gesamten Tabelle ein Bezeichner für die in der Tabelle enthaltenen Datenelemente sein. Wenn in der Datenbank mehrere Tabellen gespeichert sind, können die vollständigen Bezeichner zudem durch Kombinationen der zuvor genannten tabellenbezogenen Bezeichner gebildet werden, insbesondere durch eine Kombination des Tabellennamens mit einem Attribut- bzw. Spaltennamen oder von Spalten- und Zeilennummern. Ferner kann vorgesehen sein, dass einzelne Datenelemente beispielsweise anhand des Namens der Tabelle, in der sie gespeichert sind, sowie ihrer jeweiligen Zeilen- und Spaltennummer individuell adressiert werden können.

Handelt es sich bei den in einer Tabelle gespeicherten Daten um Kundendaten eines Unternehmens, kann jeder Datensatz in einer Ausführungsform genau einem Kunden zugeordnet sein. Die als Bezeichner dienenden Attribute der Datensätze können etwa den Kunden zugeordnete eindeutige Identifikationsnummern, Vor- und Nachnamen, Geburtsdaten, Bestandteile der Postadressen der Kunden und beliebige weitere den Kunden zugeordnete Daten umfassen, deren Werte jeweils in einem Datenelement der Datensätze gespeichert werden. Unter Verwendung der den Attributen entsprechenden Bezeichner lässt sich somit beispielsweise durch einen einheitlichen Zugriffsbefehl auf Namen und Geburtsdaten sämtlicher Kunden zuzugreifen, deren Kundendaten in der Tabelle gespeichert sind.

Die Werte der in der Datenbank 11 gespeicherten Datenelemente können grundsätzlich beliebige Zeichenfolgen umfassen. Dabei können die Werte einzelner Datenelemente bzw. Gruppen von Datenelementen - wie etwa die Datenelemente der Spalte einer Tabelle - jedoch bestimmte definierte Eigenschaften aufweisen. Diese können in so genannten Metadaten spezifiziert sein, die zusätzlich zu den Datenelementen in der Datenbank 11 hinterlegt sind. Dabei kann die Verwaltungseinheit 12 anhand der in den Metadaten hinterlegten Eigenschaften beispielsweise Datenintegritätsprüfungen vornehmen, bei denen überprüft wird, ob die Datenelemente die zugewiesenen Eigenschaften aufweisen. Ferner können die Werte jedoch auch Eigenschaften besitzen, die nicht in Metadaten hinterlegt sind (etwa die Eigenschaft, ein Name einer Person zu sein).

Die Eigenschaften der in der Datenbank 11 gespeicherten Datenwerte bestimmen die möglichen Operationen, die mit den Datenwerten ausgeführt werden können (beispielsweise Rechenoperation für Zahlen oder alphabetische Sortierung von Buchstabenfolgen). Ferner sind die Eigenschaften mit der inhaltlichen Semantik verknüpft, d.h. mit der Bedeutung, welche die Datenwerte etwa für die Benutzer des Datenbanksystems 10 haben. Insbesondere kann sich die Bedeutung der Daten nicht ausschließlich anhand von Namen von Attributen oder anderen den Daten zugeordneten Metadaten erschließen, sondern auch aus den (sichtbaren) Eigenschaften der Datenelemente.

Von Interesse sind hier vor allem Eigenschaften, die den Werten bestimmter Gruppen von Datenelementen, beispielsweise den zu einem bestimmten Attribut gehörenden Datenelementen, gemeinsam sind. Einige solcher Eigenschaften werden nachfolgend beispielhaft aufgeführt:
Eine mögliche Eigenschaft ist beispielsweise die Länge der die Datenwerte bildenden Zeichenfolgen, die genau festgelegt oder auf einen Maximal- und/oder Minimalwert begrenzt sein kann. Eine weitere Eigenschaft können die Zeichenarten sein, aus denen die die Werte bildenden Zeichenfolgen aufgebaut sind. So können bestimmte Datenelemente ausschließlich durch Ziffern oder Buchstaben gebildet oder aus einer Kombination von Ziffern und Buchstaben aufgebaut sein. Ferner kann für Werte von Datenelementen, die Zahlen repräsentieren, die Zahlenart und/oder ein Wertebereich vorgegeben sein, wobei mögliche Zahlenarten beispielsweise natürliche Zahlen, ganze Zahlen und Gleitkommazahlen mit einer vorgegebenen Anzahl von Gleitkommastellen umfassen können. Weiterhin können die Eigenschaften das Format der möglichen Werte von Datenelementen betreffen. Mögliche Formate können beispielsweise vorsehen, dass die Werte aus mehreren Zeichengruppen bestehen, die ihrerseits bestimmte Eigenschaften aufweisen können und/oder in einer vorgegebenen Weise - etwa durch vorgegebenen Zeichen - miteinander verbunden sind. Beispiele hierfür sind etwa Datumsformate oder Formate von Web- und E-Mail-Adressen. Insbesondere kann anhand des Formats auch vorgegeben sein, dass die Werte vorgegebene Präfixe und/oder Suffixe besitzen. Eine weitere Eigenschaft eines Datenelements kann das genau einmalige Auftreten seines Werts innerhalb einer vorgegebenen Gruppe von Datenelementen sein. Diese Eigenschaft besitzen insbesondere Datenelemente, in denen Identifikationsnummer oder dergleichen gespeichert sind. Zudem können Datenelemente, wie zuvor bereits gesagt, die Eigenschaft besitzen, Namen von Personen zu sein.

Über die zuvor genannten Beispiele hinaus, sind dem Fachmann weitere Eigenschaften von Datenwerten bekannt, welche die Datenwerte aufweisen können, die in einer Datenbank 11 eines erfindungsgemäßen Datenbanksystems 10 gespeichert sind.

Mögliche Zugriffe auf die in der Datenbank 11 gespeicherten Daten umfassen unter anderem Datenbankabfragen zum Auslesen von Datenelementen. Um eine derartige Datenbankabfrage vorzunehmen, übermittelt ein Benutzer einen entsprechenden Zugriffsbefehl, in dem die auszulesenden Datenelemente anhand eines Bezeichners spezifiziert sind, an die Verwaltungseinheit 12 des Datenbanksystems 10. Wenn die Verwaltungseinheit 12 einen solchen Befehl empfängt, identifiziert sie die von dem Zugriffsbefehl betroffenen Datenelemente anhand des angegebenen Bezeichners innerhalb der Datenstruktur der Datenbank 11, liest diese Datenelemente (oder diesen zugeordneten Zusatzdatenelemente, die nachfolgend genauer erläutert werden) aus und übermittelt die ausgelesenen Werte an den anfragenden Benutzer. In ähnlicher Weise können die Benutzer durch entsprechend Befehle, die von der Verwaltungseinheit 12 umgesetzt werden, beispielsweise Werte von Datenelementen verändern, Datenelemente löschen und Datenelemente innerhalb der Datenstruktur anlegen. Als Befehlssprache für die Zugriffsbefehle auf die Datenbank 11 kann dabei grundsätzlich jede dem Fachmann bekannte Datenbanksprache, wie beispielsweise SQL, verwendet werden.

Zudem kann die Verwaltungseinheit 12 eine Funktion zur Kontrolle der Zugriffe von Benutzern 13 auf die Datenbank 11 bereitstellen, welche die Überprüfung von Berechtigungen von Benutzern zum Zugriff auf die Datenbank 11 umfasst. Diese Überprüfung geschieht vorzugsweise auf der Grundlage von Benutzerberechtigungsdaten, die in dem beispielhaft in der Figur 1 gezeigten Datenbanksystem 10 in einer separaten Benutzerberechtigungsdatenbank 14 gespeichert sind. Gleichfalls kann es jedoch auch vorgesehen sein, die Benutzerberechtigungsdaten in anderer Weise, beispielsweise in der Datenbank 11 selbst zu speichern. Die Benutzerberechtigungsdaten spezifizieren für einzelne Benutzer und/oder Gruppen von Benutzern die in der Datenbank 11 gespeicherten Datenelemente, auf welche die jeweiligen Benutzer bzw. Benutzergruppen zugreifen dürfen. Hierzu können die Benutzerberechtigungsdaten beispielsweise Zuordnungen zwischen Benutzern bzw. Benutzergruppen und Bezeichnern der Datenelemente enthalten, auf die ein Zugriff erlaubt ist. Zudem können die erlaubten Zugriffsarten, d.h. ob ein Lese- und/oder Schreibzugriff auf bestimmte Datenelemente erlaubt ist und ob Datenelemente erzeugt und/oder gelöscht werden dürfen, spezifiziert sein, wobei es in einer Ausgestaltung möglich ist, Benutzern und/oder Benutzergruppen unterschiedliche Zugriffsarten für verschiedene Datenelemente zu gestatten.

Die Überprüfung der Zugriffsberechtigung erfolgt vorzugsweise dann, wenn die Verwaltungseinheit 12 einen Zugriffsbefehl von einem Benutzergerät 13 empfängt. Aufgrund des Empfangs des Zugriffsbefehls wird der das Benutzergerät 13 steuernd Benutzer zunächst identifiziert und gegebenenfalls eine oder mehrere Benutzergruppen ermittelt, denen der Benutzer zugeordnet ist. Die Benutzeridentifikation bzw. die Ermittlung der Benutzergruppe des Benutzers kann beispielsweise anhand einer zusammen mit dem Zugriffsbefehl übermittelten Benutzerkennung vorgenommen werden. Darüber hinaus ist in einer Ausgestaltung zudem eine Nutzerauthentisierung vorgesehen. Hierzu kann grundsätzlich jedes dem Fachmann an sich bekannte Authentisierungsverfahren eingesetzt werden. Beispielsweise kann die Verwaltungseinheit 12 ein ebenfalls zusammen mit dem Zugriffsbefehl übermitteltes Authentisierungsmerkmal, wie etwa ein dem Nutzer zugeordnetes Passwort, überprüfen. Nach der Identifizierung des Benutzers bzw. der Ermittlung der Benutzergruppe des Benutzers bestimmt die Verwaltungseinheit 12 anhand der in der Benutzerberechtigungsdatenbank 14 gespeicherten Benutzerberechtigungsdaten, ob der Benutzer dazu berechtigt ist, den in dem Zugriffsbefehl angegebenen Zugriff auf die in dem Zugriffsbefehl angegebenen Datenelemente vorzunehmen. Nur wenn dies der Fall ist, führt die Verwaltungseinheit 12 den Zugriffsbefehl aus.

In der zuvor beschriebenen Weise können Benutzer mithilfe von Benutzergeräten 13 bei entsprechender Berechtigung auf die Originalwerte der in der Datenbank 11 gespeicherten Datenelemente zugreifen. Diese entsprechen in der Regel den realen Gegebenheiten, die in der Datenbank 11 abgebildet werden und die in geeigneter Weise erfasst und in einer dem Fachmann an sich bekannten Weise in der Datenbank 11 gespeichert werden. Insbesondere kann es sich bei den Originalwerten etwa um die realen Kundendaten eines Unternehmens handeln, welche die tatsächlichen persönlichen Informationen der Kunden des Unternehmens enthalten.

Das Datenbanksystem 10 ermöglicht zudem, anonymisierte Werte für Datenelemente bereitzustellen und diese bei einem Zugriff auf die Datenbank 11 anstelle der Originalwerte an einen Benutzer zu übermitteln. Hierzu umfasst das Datenbanksystem 10 insbesondere eine Anonymisierungseinheit 15, die dazu eingerichtet ist, anonymisierte Werte aus den Originalwerten zu ermitteln und bereitzustellen. Vorzugsweise ist die Anonymisierungseinheit 15 gleichfalls in der Form eines Softwareprogramms implementiert, das auf einem Prozessor des Datenbanksystems 10 ausgeführt wird. Die vorgenommene Anonymisierung kann dabei für sämtliche in der Datenbank 11 gespeicherten Datenelemente vorgenommen werden oder lediglich für eine Teil dieser Datenelemente, die im Folgenden auch als schützenswerte Datenelemente bezeichnet werden. Diese können beispielsweise besonders sensible personenbezogene Informationen enthalten, die innerhalb eines personenbezogenen Datenbestands, der in der Datenbank 11 gespeichert ist, enthalten sind.

Um anonymisierte Werte bereitzustellen werden Zusatzdatenelemente für die zu anonymisierenden Datenelemente erzeugt, und die Zusatzdatenelemente werden derart mit den die Originalwerte enthaltenden Datenelementen (diese werden im Folgenden auch als Originaldatenelemente) verknüpft, dass die Verwaltungseinheit 12 aufgrund des Empfangs eines Zugriffsbefehls dazu in der Lage ist, die jeweils mit den Originaldatenelementen verknüpften Datenelemente zu ermitteln und auszulesen. Sodann berechnet die Anonymisierungseinheit 15 aus den in den Originaldatenelementen gespeicherten Originalwerten anonymisierte Werte, die in den Zusatzdatenelementen gespeichert werden, wobei der aus einem Originalwerte ermittelte anonymisierte Wert in dem Zusatzdatenelement gespeichert wird, das mit dem den Originalwert enthaltenden Originaldatenelement verknüpft ist. Die Anonymisierungseinheit 15 ist in einer bevorzugten Ausgestaltung auch dazu ausgebildet, die Zusatzdatenelemente mit den die Originalwerte enthaltenden Datenelementen zu verknüpfen bzw. die entsprechenden Verknüpfungen in dem Datenbanksystem 10 einzurichten. Ferner kann die Anonymisierungseinheit 15 in einer Ausführungsform auch die Zusatzdatenelemente erzeugen. In weiteren Ausgestaltungen können die Zusatzdatenelemente jedoch gleichfalls durch eine andere Einheit, wie beispielsweise die Verwaltungseinheit 12, erzeugt werden.

Die Verknüpfung zwischen einem Originaldatenelement und einem Zusatzdatenelement kann beispielsweise dadurch vorgenommen werden, dass dem Zusatzdatenelement ein Bezeichner des Originaldatenelements zugeordnet wird. Zusätzlich wird das Zusatzdatenelementen bei einer solchen Verknüpfung mit einer Markierung versehen, die es als Zusatzdatenelement kennzeichnet und damit von dem Originaldatenelement unterscheidbar macht. Diese Markierung kann in einer Ausgestaltung zusätzlich (etwa als Präfix oder Suffix) in den Bezeichner aufgenommen werden. Der dem Zusatzdatenelement zugeordneten Bezeichner kann dem Originaldatenelement eindeutig zugeordnet sein. Gleichfalls kann die Verknüpfung zwischen einem Originaldatenelement und einem Zusatzdatenelement jedoch auch vorgenommen werden, in dem einer Gruppe von Zusatzdatenelement ein Bezeichner der zugeordneten Gruppe von Originaldatenelementen zugeordnet und mit einem Zusatz versehen wird. Eine eindeutige Verknüpfung zwischen Originaldatenelementen und Zusatzdatenelement kann sich in diesem Fall zusätzlich aus der Anordnung der miteinander verknüpften Datenelemente innerhalb der vorgesehenen Datenstruktur der Datenbank 11 ergeben.

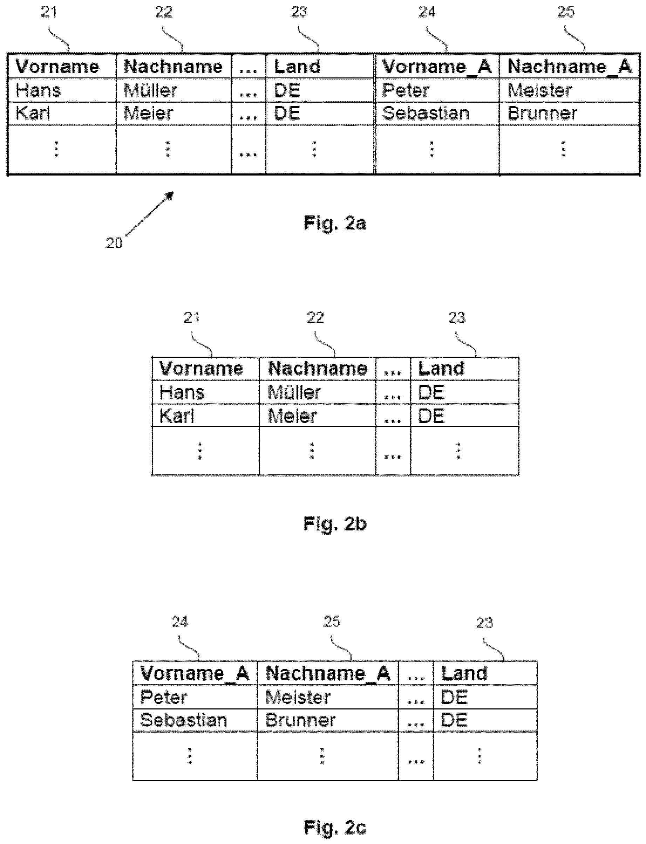

In der Figur 2 ist eine solche Verknüpfung von Original- Zusatzdatenelement beispielhaft für eine Tabelle veranschaulicht. In der dargestellten Tabelle sind personenbezogene Informationen von Personen gespeichert. Die in der Tabelle enthaltenen Datensätze, d.h. die Zeilen der Tabelle, betreffen jeweils eine Person und enthalten eine Anzahl vorgegebener Attribute, die jeweils in einer Spalte der Tabelle angegeben sind. Als Attribute sieht die in der Figur 2 dargestellte Tabelle den Vornamen der Person (in der Spalte 21), den Nachnamen der Person (in der Spalte 22) sowie das Land, in dem die Person wohnt (in der Spalte 23), vor. Darüber hinaus kann die Tabelle beliebige weitere Attribute enthalten, die in der Figur 2 nicht dargestellt sind.

Die Anonymisierung wird in dem dargestellten Beispiel nicht für alle in der Tabelle enthaltenen Datenelemente vorgenommen, sondern für vorgegebene schützenswerte Attribute vorgenommen. Dabei wird davon ausgegangen, dass die Anonymisierung für den in der ersten Spalte 21 angegebenen Vornamen und den in der zweiten Spalte 22 angegebenen Nachnamen handelt, während für die weiteren Attribute wie insbesondere das in der letzten gezeigten Spalte 23 hinterlegte Land keine Anonymisierung vorgenommen wird. Zur Anonymisierung der Spalten 21 und 22 erzeugt die Anonymisierungseinheit 15 jeweils eine Zusatzspalte 24 bzw. 25, die in die Tabelle eingefügt bzw. an diese angefügt wird. Dabei wird die Zusatzspalte 24 dem Attribut "Vorname" der Spalte 21 zugeordnet und die Zusatzspalte 25 wird dem Attribut "Nachname" der Spalte 22 zugeordnet. Die zwischen den Originaldatenelementen und den Zusatzdatenelementen erfolgt dadurch, dass die Zusatzspalten 24 und 25 jeweils mit dem Bezeichner der zugehörigen Originalspalte versehen wird. An diese Bezeichner wird zudem ein Suffix (hier das Suffix "_A") angehängt, um die Zusatzspalten als solche gekennzeichnet. Die in den Zusatzspalten 24 und 25 enthaltenen Zusatzdatenelemente werden in dieser Ausgestaltung zu Bestandteilen der in der Tabelle enthaltenen Datensätze, so dass sich eine eindeutige Zuordnung zwischen Originaldatenelementen und Zusatzdatenelementen ergibt. So ist beispielsweise dem in der ersten Spalte enthaltenen Originaldatenelement des Attributs "Vorname" (Wert: "Hans") das Zusatzdatenelement mit dem Attribut "Vorname_A" desselben Datensatzes (Wert: "Peter") zugeordnet.

In weiteren Ausgestaltungen kann die Verknüpfung zwischen Originaldatenelementen und Zusatzdatenelementen auch in anderer Weise vorgenommen werden. Beispielsweise können zu Herstellung der Verknüpfung Zeiger oder Referenzen eingesetzt werden, die mit den Originaldatenelementen verbunden werden und jeweils auf das zugeordnete Zusatzdatenelement referenzieren.

Die Erzeugung der anonymisierten Werte nimmt die Anonymisierungseinheit 15 unter Verwendung von Abbildungsregeln vor. Diese Abbildungsregeln sind bei dem in der Figur 1 dargestellten Datenbanksystem 10 in einer Regeldatenbank 16 hinterlegt, die zusätzlich zu der Datenbank 11 in dem Datenbanksystem 10 eingerichtet ist. Gleichfalls kann es jedoch auch vorgesehen sein, die Abbildungsregeln beispielsweise in der Datenbank 11 in einem bestimmten, logisch abgetrennten Speicherbereich zu speichern.

Für verschiedene einzelne Originaldatenelemente oder Gruppen von Originaldatenelementen der Datenbank 11 können unterschiedliche Abbildungsregeln in der Regeldatenbank 16 hinterlegt werden. Die Zuordnung zwischen Abbildungsregeln und zu anonymisierenden Datenelementen ist gleichfalls in der Regeldatenbank 16 hinterlegt. Zur Erzeugung der anonymisierten Werte der schützenswerten Originaldatenelemente ermittelt die Anonymisierungseinheit 15 somit zunächst in der Regeldatenbank 16 die Abbildungsregeln, die den zu anonymisierenden Datenelementen jeweils zugeordnet sind. Dann wendet die Anonymisierungseinheit die ermittelten Abbildungsregeln auf die Datenwerte der zu anonymisierenden Datenelemente an und berechnet so die anonymisierten Werte, die sodann in den Zusatzdatenelementen gespeichert werden. Die Zuordnung zwischen Abbildungsregeln und Datenelementen kann beispielsweise anhand der Bezeichner der Datenelemente vorgenommen werden. Dabei können Abbildungsregeln einzelnen Datenelementen individuell zugeordnet werden. Gleichfalls können Gruppen von Datenelementen, wie beispielsweise die zu einem Attribut gehörenden Datenelemente einer Tabelle, einheitliche jeweils eine Abbildungsregel zugeordnet werden. Insbesondere können kann einer Gruppe gleichartiger Datenelemente auf diese Weise mit einer gemeinsamen Abbildungsregel verknüpft werden, welche die Originalwerte der Gruppenmitglieder in gleicher Weise anonymisierten Werten zuordnet.

Die Abbildungsregeln werden vorzugsweise von einem Administrator vorgegebenen und in der Regeldatenbank 10 hinterlegt, wobei der Administrator zu diesem Zweck über eine spezielle Zugriffsberechtigung auf die Rechtedatenbank besitzt. Zudem legt der Administrator auch die schutzwürdigen Datenelemente der Datenbank 11 fest und ordnet diesen jeweils die Datenelemente zu die unter Verwendung der betreffenden Abbildungsregel anonymisiert werden.

Anhand der Abbildungsregeln wird die Anonymisierung bei entsprechender Konfiguration der Abbildungsregeln so vorgenommen, dass aus den anonymisierten Werten nicht auf die Originalwerte geschlossen werden kann. Die Abbildungsregeln definieren somit unumkehrbare Abbildungen der Originalwerte auf die anonymisierten Werte. Insbesondere können die Abbildungsregeln beispielsweise Hash-Funktionen bzw. einen Hash-Algorithmus umfassen, der zu einer gewissen Anzahl von Kollisionen führt, bei denen mehrere Originalwerte auf denselben anonymisierten Wert abgebildet werden. Aufgrund dieser Kollision ist eine eindeutige Bestimmung des Originalwerts aus dem anonymisierten Wert nicht möglich. Weiterhin können die Abbildungsregeln Zufallsalgorithmen umfassen, mit denen eine zufällige Abbildungsvorschrift von Originalwerte auf anonymisierte Werte erzeugt wird. Bei solchen zufälligen Abbildungsvorschriften ist es ebenfalls nicht möglich aus einem anonymisierten Wert auf den Originalwert zu schließen.

Dabei ist die Erfindung jedoch nicht auf Abbildungsregeln der zuvor genannten Art beschränkt. So können beispielsweise auch einfachere Abbildungsregeln zur Ermittlung der anonymisierten Werte verwendet werden, die etwa bestimmte Stellen des Originalwerts nach einem regelmäßigen Muster verändern. Bei solchen Abbildungsregeln ist es in der Regel zwar prinzipiell möglich, aus den anonymisierten Werten auf die Originalwerte zu schließen (beispielsweise durch den Vergleich einer Mehrzahl von anonymisierten Werten), der Rechenaufwand zu Ermittlung der anonymisierten Werte ist jedoch in der Regel geringer. Solche einfacheren Abbildungsregeln eignen sich für Anwendungen bzw. Datenelemente, bei denen ein geringerer Schutz der Originalwerte ausreichend ist.

Weiterhin können die anonymisierten Werte anhand der Abbildungsregeln vorzugsweise so erzeugt, dass bestimmte Eigenschaften der zugehörigen Originalwerte erhalten bleiben, wenn dies gewünscht ist. Hierdurch wird erreicht, dass die Nutzbarkeit der Werte nach der Anonymisierung jedenfalls teilweise erhalten bleibt. Insbesondere kann vorgesehen sein, die Abbildungsregeln so auszugestalten, dass anonymisierten Werte eine vergleichbare inhaltliche Semantik besitzen wie die Originalwerte. Hierdurch wird erreicht, dass die anonymisierten Werte in ähnlicher Weise verarbeitet werden können wie die Originalwerte. Zudem wird die Verarbeitung durch menschliche Benutzer erleichtert, die die sich etwa bei der Steuerung von Datenverarbeitungsprozessen in der Regel auch an der Bedeutung von Datenwerten orientieren.

Bei den zu erhaltenen Eigenschaften kann es sich grundsätzlich um jede einzelnen oder eine Kombination der zuvor beispielhaft genannten Eigenschaften handeln. So kann beispielsweise die Länge und/oder Zeichenart der den Originalwert bildenden Zeichenfolge erhalten bleiben. Zeichenfolgen, die ein bestimmtes Datenformat aufweisen, werden zudem vorzugsweise auf anonymisierte Zeichenfolgen mit demselben Format abgebildet. Hierdurch wird die Verarbeitung der anonymisierten Werte durch Programme ermöglicht bzw. erleichtert, die ein bestimmte Zeichenarten bzw. Datenformate voraussetzen.

Zudem kann vorgesehen sein, dass vorgegebene Bestandteile der Zeichenfolgen von Originaldatenelementen bei der Ermittlung der anonymisierten Werte erhalten bleiben. Hierdurch ist es beispielsweise möglich, auf der Grundlage der anonymisierten Werte von in der Datenbank 11 gespeicherten Datenelementen statistische Auswertungen vorzunehmen, deren Ergebnisse auch für die realen Daten gültig sind. So kann es beispielsweise vorgesehen sein, dass bei der Ermittlung von anonymisierten Werten von Postleitzahlen, die in Personenadressen enthalten sind, diejenigen Ziffern erhalten werden, welche die Region kennzeichnen (also etwa die ersten beiden Stellen der fünfstelligen deutschen Postleitzahlen). Bei einer statistischen Auswertung der anonymisierten Daten kann somit etwa die (reale) Verteilung von Kunden auf die vorgesehenen Postleitzahlregionen ermittelt werden, ohne auf die realen Daten zugreifen zu müssen.

Weiterhin können Abbildungsregeln vorgegeben werden, mit denen Namen von Personen (Vornamen und/oder Nachnamen) auf fiktive Namen abgebildet, so dass auch die anonymisierten Werte als Namen erkennbar sind und wie solche verarbeitet werden können. Um dies zu erreichen, ist in einer Ausgestaltung vorgesehen, dass zunächst eine Liste mit einer bestimmten Anzahl von fiktiven Namen erzeugt wird (wobei diese Namen zumindest teilweise mit in der Datenbank 11 vorkommenden Originalnamen übereinstimmen können). Sodann wird aus den Originalnamen anhand eines vorgegebenen Algorithmus jeweils ein Hashwert innerhalb eines Wertebereichs erzeugt, welcher der Anzahl der fiktiven Namen entspricht. Als anonymisierter Wert des Originalnamens wird dann der dem Hashwert entsprechende Eintrag aus der fiktiven Namensliste ausgewählt. Die Anzahl der fiktiven Namen und dementsprechend der Wertebereich der möglichen Hashwerte wird vorzugsweise relativ klein im Vergleich zu der Anzahl auftretender realer Namen gewählt. Hierdurch wird erreicht, dass mehrere reale Namen jeweils auf einen einzigen fiktiven Namen abgebildet werden, wobei die Möglichkeit derartiger Kollisionen verhindert, dass aus einem fiktiven Namen auf den realen Namen eindeutig geschlossen werden kann. Durch die Verwendung einer Hashfunktion wird dabei erreicht, dass ein bestimmter (mehrmals auftretender) realer Name stets auf denselben fiktiven Namen abgebildet wird. Diese Eigenschaft kann etwa für eine statistische Auswertung der anonymisierten Datenelemente von Interesse sein, um Ergebnisse zu erhalten, die auch für die realen Daten gültig sind. In einer alternativen Ausgestaltung kann jedoch ebenfalls vorgesehen sein, dass anstelle des Hashwerts ein Zufallswert anhand des Originalwerts ermittelt wird und der fiktive Name anhand dieses Zufallswerts aus der fiktiven Namensliste ausgewählt wird. Hierdurch wird ein mehrmalig auftretender realer Name nicht stets auf denselben fiktiven Namen abgebildet.

Ferner kann vorgesehen sein, dass die Eindeutigkeit von Originalwerten von Datenelementen wie etwa Kundennummern, bei der Ermittlung der anonymisierten Werte beibehalten wird. Dies ist insbesondere dann zweckmäßig, wenn anhand der anonymisierten Datenwerte Geschäftsprozesse simuliert bzw. getestet werden sollen, welche anhand von eindeutigen Datenwerten gesteuert werden. Zur Erhaltung der Eindeutigkeit kann beispielsweise vorgesehen sein, die möglichen Originalwerte in zufälliger Reihenfolge in eine Liste einzutragen und als anonymisierten Wert eines Originalwerts den dem Originalwert entsprechenden Listeneintrag auszuwählen (also beispielsweise den dritten Listeneintrag für den Originalwert "3"). Hierbei kann zusätzlich vorgesehen sein, den Wertebereich der möglichen Originalzahlenwerte gemäß der Ziffernanzahl aufzuteilen und für jeden Teilbereich eine Liste mit einer zufälligen Anordnung der enthaltenen Zahlenwerte zu erzeugen, aus welcher dann der anonymisierte Wert ausgewählt wird. Hierdurch wird erreicht, dass der anonymisierte Wert dieselbe Anzahl von Stellen aufweist wie der Originalwert.

Während die zuvor beispielhaften genannten Abbildungsregeln möglichst geringe Abweichungen zwischen Originalwerten und anonymisierten Werten gewährleisten, können für bestimmte Datenelement und/oder Gruppen von Datenelementen zudem Abbildungsregeln vorgegeben werden, die größere Abweichungen zwischen den Originalwerten und anonymisierten Werten ermöglichen. Solche Abbildungsregeln können eingesetzt werden, wenn eine größere Verfremdung der Originalwerte gewünscht ist. Ein Beispiel für eine solche Abbildungsregel ist das an sich bekannte "Ausixen", bei dem die Zeichen der den Originalwerte bildenden Zeichenfolge durch ein bestimmten vorgegebenes Zeichen, wie beispielsweise ein "X" ersetzt werden.

Insbesondere können Abbildungsregeln dabei auch so vorgegebenen werden, dass bestimmte Eigenschaften der Originalwerte gezielt verfremdet werden, wenn dies in einer Anwendung bzw. für bestimmte Datenelemente gewünscht ist. Hierzu werden für die betreffenden Datenelemente Abbildungsregeln vorgegebenen, die so ausgestaltet sind, dass die mit dem Abbildungsregeln berechneten anonymisierten Werte eine oder mehrere vorgegebene Eigenschaften der Originalwerte nicht aufweisen.

Auf die zuvor beschriebene Art und Weise kann die Anonymisierungseinheit 15 anonymisierte Werte von schutzwürdigen Datenelementen unabhängig von Zugriffen von Benutzerendgeräten 13 auf die Datenelemente erzeugen und in der Datenbank 11 speichern. Die Erzeugung und Speicherung der anonymisierten Werte kann dabei beispielsweise in einem einheitlichen Anonymisierungsdurchlauf für alle schutzwürdigen Datenelemente vorgenommen werden, die zu einem bestimmten Zeitpunkt in der Datenbank 11 gespeichert sind. Wenn etwa aufgrund der Erfassung weiterer Daten neue schutzwürdige Datenelemente in der Datenbank 11 erzeugt werden, können anonymisierte Werte für diese Datenwerte in weiteren Anonymisierungsdurchläufen erzeugt und in der Datenbank 11 hinterlegt werden. Wenn in der Datenbank 11 regelmäßig neue Datenelemente erzeugt werden, wie es oftmals bei Datenbanken zur Speicherung von Kundendaten der Fall ist, können die Anonymisierungsdurchläufe regelmäßig, beispielsweise täglich, durchgeführt werden. Gleichfalls ist es möglich, Anonymisierungsdurchläufe bedarfsmäßig auszuführen. Um die Anonymisierungsdurchläufe jeweils auf die schutzwürdigen Datenelemente zu beschränken, für die zuvor kein anonymisierter Wert berechnet und in der Datenbank 11 hinterlegt worden ist, ist vorzugsweise vorgesehen, dass vor jedem Anonymisierungsdurchlauf zunächst die schutzwürdigen Datenelemente ermittelt werden, denen kein Zusatzdatenelement mit einem anonymisierten Wert zugeordnet ist. Nur für diese schutzwürdigen Datenelemente werden sodann Zusatzdatenelemente erzeugt, in denen anonymisierte Werte hinterlegt werden.

Der Zugriff auf die in der Datenbank 11 gespeicherten Zusatzdatenelemente mit den anonymisierten Werten erfolgt über die Verwaltungseinheit 12 des Datenbanksystems 10 in Verbindung mit Zugriffsanforderungen, die von Benutzergeräten 13 gesendet werden. Aufgrund der in der Datenbank 11 bereitgestellten Zusatzdatenelemente ist die Verwaltungseinheit dabei in der Lage, aufgrund von Zugriffsanforderungen von Benutzern entweder die anonymisierte Werte oder die Originalwerte von Datenelemente an die Benutzer zu übermitteln. Der Zugriff auf die Originalwerte erfolgt dabei in der zuvor bereits beschriebenen Weise. Wenn auf einen anonymisierten Wert eines Datenelementelements zugegriffen wird, dann ermittelt die Verwaltungseinheit 12 das Zusatzdatenelement anhand der beschriebenen Verknüpfung zwischen dem Originaldatenelement und dem Zusatzdatenelement. Sodann liest die Verwaltungseinheit das ermittelte Zusatzdatenelement aus und übermittelt den ausgelesenen anonymisierten Wert an den Benutzer.

Für die in der Figur 2a gezeigte Tabelle 20 ist in der Figur 2b beispielhaft veranschaulicht, in welcher Gestalt die Tabelle aufgrund eines die gesamte Tabelle übermittelten Zugriffsbefehls übertragen wird, wenn die Originalwerte der Datenelemente übertragen wird. Wie ersichtlich ist, enthält die übertragene Tabelle dabei Originalwerte (und Attribute) der schutzwürdigen Spalten 21 und 22 sowie die nicht schutzwürdigen Spalten, insbesondere die Spalte 23. Figur 2c zeigt demgegenüber die Gestalt der Tabelle, wenn anonymisierte Werte an einen Benutzer übertragen werden. In diesem Fall enthält die Tabelle die Zusatzspalten 24 und 25 anstelle der schutzwürdigen Originalspalten 21 und 22. Die nicht schutzwürdigen Spalten, insbesondere die Spalte 23 ist ebenfalls enthalten.

Zugriffe auf die anonymisierten Werte können somit mithilfe Verwaltungseinheit 12 grundsätzlich in ähnlicher Weise wie die Zugriffe auf den Originalwerte vorgenommen. Es ist lediglich erforderlich, dass die Verwaltungseinheit dann, wenn ein anonymisierter Wert ausgelesen werden soll, einer Verknüpfung zu dem Zusatzdatenelement folgt. Diese Funktionalität kann in der Regel in relativ einfacher Weise in einer Verwaltungseinheit 12 eines Datenbanksystems implementiert werden, so dass es insbesondere in einfacher Weise möglich ist, die bestehende Datenbank so anzupassen, dass sie neben den Originalwerten von Datenelementen anonymisierte Werte bereitstellen.

Ob an einen Benutzer, der einen Zugriffsbefehl an die Verwaltungseinheit 12 sendet, der Originalwert oder der anonymisierte Wert übermittelt wird, richtet sich vorzugweise nach vorgegebenen Zugriffsrechten des Benutzers. Dabei ist vorgesehen, dass für die in der Datenbank 11 gespeicherten schutzwürdigen Datenelemente, denen Zusatzdatenelemente mit anonymisierten Werten zugeordnet sind, unterschiedliche Zugriffsberechtigungen für verschiedene Benutzer oder Benutzergruppen festgelegt werden. Eine erste Benutzerberechtigung ermöglicht dabei, den Zugriff auf die Originalwerte der schutzwürdigen Datenelemente. Während eine zweite Benutzerberechtigung den Zugriff auf die anonymisierten Werte, nicht jedoch auf die Originalwerte gestattet. Diese Zugriffsberechtigungen können zusätzlich zu den zuvor beschriebenen Zugriffsberechtigungen vorgesehen sein, die festlegen, ob ein Benutzergerät 13 bzw. ein Benutzer generell auf ein Datenelement zugreifen darf und welche Zugriffsarten gegebenenfalls erlaubt sind. Zusätzlich zu diesen Zugriffsberechtigungen können die erste und zweite Zugriffsberechtigung für den Zugriff auf die Originalwerte bzw. anonymisierte Werte dabei in der Berechtigungsdatenbank 14 des Datenbanksystems 10 gespeichert sein.

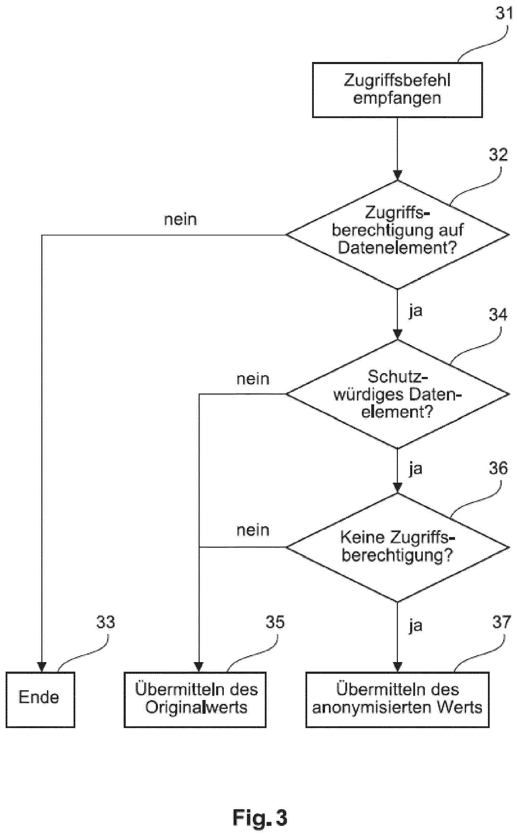

Unter Verwendung der zuvor genannten ersten und zweiten Zugriffsberechtigung sowie ggf. der weiteren Zugriffsberechtigungen, die sich auf den generellen Zugriff auf die Datenelemente beziehen, wird ein von einem Benutzergerät 13 übermittelter Zugriffsbefehl beispielsweise so bearbeitet, wie im Folgenden unter Bezugnahme auf das in der Figur 3 gezeigte Ablaufdiagramm erläutert wird:
Zunächst empfängt die Verwaltungseinheit 12 des Datenbanksystems 10 den Zugriffsbefehl von dem Benutzerendgerät 13 eines Benutzers (Schritt 31). Sodann der Benutzer vorzugsweise in einer zuvor beschriebenen Art und Weise identifiziert und authentisiert. Ferner werden anhand des in dem Zugriffsbefehl angegebenen Bezeichners die Datenelemente der Datenbank 11 ermittelt, auf die sich der Zugriffsbefehl bezieht. Sodann wird in einer Ausgestaltung anhand der in der Berechtigungsdatenbank 16 gespeicherten Zugriffsberechtigungen geprüft, ob das Benutzerendgerät 13 bzw. der das Benutzerendgerät 13 bedienende Benutzer generell für den gewünschten Zugriff (d.h. im vorliegenden Fall zum Auslesen der anhand des Bezeichners spezifizierten Datenelemente) berechtigt ist (Schritt 32). Wenn die Verwaltungseinheit 12 feststellt, dass dies nicht der Fall ist, wird der Zugriff abgebrochen und vorzugsweise eine entsprechende Benachrichtigung an das Benutzerendgerät gesendet (Schritt 33).

Wird hingegen festgestellt, dass eine generelle Berechtigung für den (lesenden) Zugriff auf die Datenelemente besteht, wird geprüft, ob es sich bei den Datenelementen um schutzwürdige Datenelemente handelt oder nicht (Schritt 34). Hierzu prüft die Verwaltungseinheit 12, ob den in dem Zugriffsbefehl bezeichneten Datenelementen Zusatzdatenelemente mit anonymisierten Werten zugeordnet sind. In einer Ausgestaltung kann auch vorgesehen sein, dass die schutzwürdigen Datenelemente der Datenbank 11 jeweils mit einer entsprechenden Kennzeichnung versehen werden, die in den Metadaten der Datenelemente, enthalten sein kann. In diesem Fall kann die Verwaltungseinheit 12 bei Vorhandensein eines solchen Kennzeichens feststellen, dass es sich um ein schutzwürdiges Datenelement handelt, ohne hierzu das zugeordnete Zusatzdatenelement ermitteln zu müssen.

Wenn die Verwaltungseinheit 12 feststellt, dass die in dem Zugriffsbefehl bezeichneten Datenelemente keine schutzwürdigen Datenelemente umfassen, liest die Verwaltungseinheit 12 die Originalwerte aus den betreffenden Datenelementen aus und übermittelt diese an das Benutzerendgerät 13, von dem der Zugriffsbefehl empfangen worden ist (Schritt 35). Wenn die Verwaltungseinheit 12 hingegen feststellt, dass sich der Zugriffsbefehl auf schutzwürdige Datenelemente bezieht, wird anhand der in der Berechtigungsdatenbank 14 gespeicherten Zugriffsberechtigungen geprüft, ob der Benutzer für einen (lesenden) Zugriff auf die Originalwerte der Datenelemente berechtigt ist oder lediglich einen Zugriffsberechtigung auf die anonymisierten Werte besteht (Schritt 36). Wird hierbei festgestellt, dass der Benutzer auf die Originalwerte zugreifen darf, werden diese aus den betreffenden Datenelementen ausgelesen und an das Benutzergerät 13 übermittelt (Schritt 35). Besteht lediglich eine Zugriffsberechtigung auf die anonymisierten Werte, werden die den Datenelementen zugeordneten Zusatzdatenelemente ausgelesen und die enthaltenen anonymisierten Werte an das Benutzergerät 13 übermittelt (Schritt 37). Zu diesem Zweck bestimmt die Verwaltungseinheit 12 die den Originaldatenwerten zugeordneten Zusatzdatenelemente in der zuvor beschriebenen Weise anhand von übereinstimmenden Bezeichnern, sofern dies nicht zuvor bereits erfolgt ist (in Schritt 34).

In weiteren Ausgestaltungen kann auf die in dem Schritt 32 vorgenommene Prüfung der generellen Berechtigung des Benutzers auf die in dem Zugriffsbefehl spezifizierten Datenelemente verzichtet werden. Dies kann beispielsweise vorgesehen sein, wenn sämtliche mit dem Datenbanksystem 10 verbundenen Benutzer eine generelle Zugriffsberechtigung auf die in der Datenbank 11 gespeicherten Daten haben. In diesem Fall prüft die Verwaltungseinheit 34 unmittelbar nach dem Empfang des Zugriffsbefehls, ob dieser schutzwürdige Datenelemente betrifft.

## Patentansprüche

1. Verfahren zum Bereitstellen eines anonymisierten Werts eines mit einem Originalwert in einer Datenbank (11) eines Datenbanksystems (10) gespeicherten Datenelements, wobei das Datenelement Bestandteil eines Datensatzes ist, der eine Person betrifft und zudem weitere Datenelemente enthält, die nicht anonymisiert werden, und wobei das Verfahren folgende Schritte umfasst:
Erzeugen eines Zusatzdatenelements für das in der Datenbank (11) gespeicherte Datenelement;
Bestimmen des anonymisierten Werts des Datenelements aus dem Originalwert anhand einer in dem Datenbanksystem (10) hinterlegten Abbildungsregel zur Ermittlung anonymisierter Werte und Speichern des anonymisierten Werts in dem Zusatzdatenelement; und
Aufnehmen des Zusatzdatenelements in den Datensatz und Verknüpfen des Zusatzdatenelements mit dem Datenelement derart, dass aufgrund des Empfangs eines das Datenelement betreffenden Zugriffsbefehls, der von einem mit dem Datenbanksystem verbundenen Benutzer gesendet wird, das Zusatzdatenelement ausgelesen und der darin enthaltene anonymisierte Wert an den Benutzer übermittelt wird,
wobei das Zusatzdatenelement unabhängig von dem Empfang eines Zugriffsbefehls erzeugt und mit dem enthaltenen anonymisierten Wert in der Datenbank (11) gespeichert wird.

2. Verfahren nach Anspruch 1, wobei eine Berechtigung des Benutzers für einen Zugriff auf den Originalwert anhand von in dem Datenbanksystem (10) gespeicherten Zugriffsberechtigungsdaten überprüft wird, und der anonymisierte Wert an den Benutzer übermittelt wird, wenn die Prüfung ergibt, dass der Benutzer nicht für einen Zugriff auf den Originalwert berechtigt ist.

3. Verfahren nach Anspruch 2, wobei aufgrund eines Empfangs eines weiteren das Datenelement betreffenden Zugriffsbefehls eines weiteren Benutzers der Originalwert des Datenelements an den weiteren Benutzer übermittelt wird, wenn festgestellt wird, dass der weitere Benutzer für den Zugriff auf den Originalwert berechtigt ist.

4. Verfahren nach einem der vorangegangenen Ansprüche, wobei die Abbildungsregel aufgrund einer Zuordnung zu dem Datenelement aus einer Mehrzahl von in dem Datenbanksystem (10) hinterlegten Abbildungsregeln zur Ermittlung anonymisierter Werte ausgewählt wird.

5. Verfahren nach einem der vorangegangenen Ansprüche, wobei die Abbildungsregeln jeweils eine unumkehrbare Abbildung von Originalwerten auf anonymisierte Werte definieren, die insbesondere eine Einwegfunktion und/oder eine Zufallsfunktion umfasst.

6. Verfahren nach einem der vorangegangenen Ansprüche, wobei die Abbildungsregel so ausgestaltet ist, dass der anonymisierte Wert wenigstens eine vorgegebene Eigenschaft des Originalwerts des Datenelements aufweist.

7. Verfahren nach einem der vorangegangenen Ansprüche, wobei der anonymisierte Wert eine Zeichenfolge mit einer Länge ist, die in einem vorgegebenen Verhältnis zur Länge der den Originalwert bildenden Zeichenfolgen steht.

8. Verfahren nach einem der vorangegangenen Ansprüche, wobei ein vorgegebener Bestandteil einer den Originalwert bildenden Zeichenfolge, insbesondere ein Präfix und/oder Suffix, in den anonymisierten Wert übernommen wird.

9. Verfahren nach einem der vorangegangenen Ansprüche, wobei der Originalwert aus einem vorgegebenen Wertebereich stammt und der zugehörige anonymisierte Wert anhand der ausgewählten Abbildungsregel aus demselben Wertebereich ausgewählt wird.

10. Verfahren nach einem der vorangegangenen Ansprüche, wobei der Originalwert des Datenelements innerhalb einer Gruppe von Datenelementen genau einmal auftritt und, wobei der anhand der Abbildungsregel ermittelte anonymisierte Wert innerhalb einer der Gruppe von Datenelementen zugeordneten Gruppe von Zusatzdatenelementen mit anonymisierten Werten genau einmal auftritt.

11. Verfahren nach einem der vorangegangenen Ansprüche, wobei es sich bei dem Originalwert des Datenelements und dem anonymisierten Wert um verschiedene Personennamen handelt.

12. Computerprogramm mit einem Programmcode, der Befehle enthält, um ein Verfahren nach einem der vorangegangenen Ansprüche auszuführen, wenn der Programmcode auf einem Prozessor ausgeführt wird.

13. System zum Bereitstellen eines anonymisierten Werts eines mit einem Originalwert in einer Datenbank (11) eines Datenbanksystems (10) gespeicherten Datenelements, wobei das Datenelement Bestandteil eines Datensatzes ist, der eine Person betrifft und zudem weitere Datenelemente enthält, die nicht anonymisiert werden,
wobei für das in der Datenbank (11) gespeicherte Datenelement ein Zusatzdatenelement erzeugt werden kann, und
wobei das System dazu ausgestaltet ist,
den anonymisierten Wert des Datenelements aus dem Originalwert anhand einer in dem Datenbanksystem (10) hinterlegten Abbildungsregel zur Ermittlung anonymisierter Werte zu bestimmen und den anonymisierten Wert in dem Zusatzdatenelement zu speichern, und
das Zusatzdatenelement in den Datensatz aufzunehmen und derart mit dem Datenelement zu verknüpfen, dass aufgrund des Empfangs eines das Datenelement betreffenden Zugriffsbefehls, der von einem mit dem Datenbanksystem (10) verbundenen Benutzer gesendet wird, das Zusatzdatenelement ausgelesen und der darin enthalten anonymisierten Werte an den Benutzer übermittelt werden kann,
wobei das Zusatzdatenelement unabhängig von dem Empfang eines Zugriffsbefehls erzeugt und mit dem enthaltenen anonymisierten Wert in der Datenbank (11) gespeichert wird.

14. Datenbanksystem (10), umfassend:
eine Datenbank (11);
ein System nach Anspruch 13 zum Bereitstellen eines anonymisierten Wertes eines in der Datenbank gespeicherten Datenelements; und
eine Verwaltungseinheit (12), die dazu ausgestaltet ist, aufgrund des Empfangs eines das Datenelement betreffenden Zugriffsbefehls eines Benutzers eine Berechtigung des Benutzers für einen Zugriff auf den Originalwert des Datenelements anhand von in dem Datenbanksystem (10) gespeicherten Zugriffsberechtigungsdaten zu überprüfen, und den anonymisierten Wert an den Benutzer zu übermitteln, wenn die Überprüfung ergibt, dass der Benutzer nicht für einen Zugriff auf den Originalwert berechtigt ist.

## Claims

1. A method for providing an anonymised value for a data element stored with an original value in a database (11) of a database system (10), wherein the data element is part of a dataset relating to a person and furthermore contains additional, non-anonymised data elements, and wherein the method comprises the following steps:
generating an additional data element for the data element stored in the database (11);
establishing the anonymised value of the data element from the original value by applying a mapping rule programmed into the database system (10) for determining anonymised values, and storing the anonymised value in the additional data element; and
including the additional data element in the dataset and linking the additional data element to the data element, such that, in case an access command relating to the data element is received from a user connected to the database system, the additional data element is read and the anonymised value contained therein is transmitted to the user,
wherein the additional data element is generated independently from the receipt of an access command and is stored in the database (11) with the anonymised value contained in the additional data element.

2. The method according to claim 1, wherein an authorization of the user to access the original value is reviewed based on authorization access data stored in the database system (10), and the anonymised value is transmitted to the user if the review shows that the user is not authorized to access the original value.

3. The method according to claim 2, wherein, in case an access command relating to the data element is received from another user, the original value of the data element is transmitted to said other user if it is determined that said other user is authorized to access the original value.

4. The method according to any one of the preceding claims, wherein the mapping rule is selected based on an allocation to the data element from a plurality of mapping rules stored in the database system (10) for determining anonymised values.

5. The method according to any one of the preceding claims, wherein the respective mapping rules define an irreversible mapping of original values to anonymised values, said mapping in particular comprising a one-way function and/or a random function.

6. The method according to any one of the preceding claims, wherein the mapping rule is designed such that the anonymised value has at least one defined characteristic of the original value of the data element.

7. The method according to any one of the preceding claims, wherein the anonymised value is a character string with a length of a defined proportion to the length of the character strings forming the original value.

8. The method according to any one of the preceding claims, wherein a defined component of the character string forming the original value, in particular a prefix and/or a suffix, is copied in the anonymised value.

9. The method according to any one of the preceding claims, wherein the original value originates from a defined value range and the associated anonymised value is selected from the same value range based on the selected mapping rule.

10. The method according to any one of the preceding claims, wherein the original value of the data element occurs exactly once within a group of data elements and wherein the anonymised value determined on the basis of the mapping rule occurs exactly once within a group of additional data elements with anonymised values that is allocated to the group of data elements.

11. The method according to any one of the preceding claims, wherein the original value of the data element and the anonymised value are different names of persons.

12. A computer program with a program code containing commands to execute a method according to any one of the preceding claims when the program code is executed in a processor.

13. A system for providing an anonymised value for a data element stored with an original value in a database (11) of a database system (10), wherein the data element is part of a dataset relating to a person and furthermore contains additional, non-anonymised data elements,
wherein an additional data element can be generated for the data element stored in the database (11), and wherein the system is designed to:
establish the anonymised value of the data element from the original value by applying a mapping rule programmed into the database system (10) for determining anonymised values, and to store the anonymised value in the additional data element; and
include the additional data element in the dataset and to link the additional data element to the data element, such that, in case an access command relating to the data element is received from a user connected to the database system (10), the additional data element can be read and the anonymised value contained therein can be transmitted to the user,
wherein the additional data element is generated independently from the receipt of an access command and is stored in the database (11) with the anonymised value contained in the additional data element.

14. A database system (10) comprising:
a database (11);
a system according to claim 13 for providing an anonymised value for a data element stored in the database; and
a control unit (12) designed to, in case an access command relating to the data element is received from a user, review an authorization of said user to access the original value of the data element based on authorization access data stored in the database system (10), and to transmit the anonymised value to the user if the review shows that the user is not authorized to access the original value.

## Revendications

1. Dispositif de mise à disposition d'une valeur anonymisée d'un élément de données sauvegardé dans une banque de données (11) d'un système de banque de données (10), l'élément de données faisant partie intégrante d'un jeu de données qui concerne une personne et qui contient en outre d'autres éléments de données qui ne sont pas anonymisés, le procédé comprenant les étapes suivantes :
génération d'un élément de données supplémentaire pour l'élément de données sauvegardé dans la banque de données (11) ;
définition de la valeur anonymisée de l'élément de données à partir de la valeur d'origine en partant d'une règle de représentation enregistrée dans le système de banque de données (10) pour la détermination de valeurs anonymisées et la sauvegarde de la valeur anonymisée dans l'élément de données supplémentaire ; et
enregistrement de l'élément de données supplémentaire dans le jeu de données et mise en lien de l'élément de données supplémentaires avec l'élément de données de manière à ce que, sur la base de la réception d'une instruction d'intervention concernant l'élément de données qui est envoyée par un utilisateur relié au système de banque de données, l'élément de données supplémentaires soit lu et que la valeur anonymisée qu'il contient soit transmise à l'utilisateur,
l'élément de données supplémentaires étant généré indépendamment de la réception d'une instruction d'intervention et sauvegardé avec la valeur anonymisée contenue dans la banque de données (11).

2. Procédé selon la revendication 1, dans lequel une autorisation de l'utilisateur pour une intervention sur la valeur d'origine est vérifiée à partir de données d'autorisation d'intervention sauvegardées dans le système de banque de données (10), et la valeur anonymisées est transmise à l'utilisateur si la vérification indique que l'utilisateur n'est pas autorisé à une intervention sur la valeur d'origine.

3. Procédé selon la revendication 2, dans lequel, sur la base d'une réception d'une autre instruction d'intervention concernant l'élément de données d'un autre utilisateur, la valeur d'origine de l'élément de données est transmise à l'autre utilisateur s'il est constaté que l'autre utilisateur est autorisé à une intervention sur la valeur d'origine.

4. Procédé selon une des revendications précédentes, dans lequel les règles de représentation sont sélectionnées sur la base d'une association à l'élément de données parmi une pluralité de règles de représentation enregistrées dans le système de banque de données (10) pour déterminer des valeurs anonymisées.

5. Procédé selon une des revendications précédentes, dans lequel les règles de représentation définissent respectivement une représentation irréversible de valeurs d'origine sur les valeurs anonymisées, laquelle représentation comprend en particulier une fonction à usage unique et/ou une fonction aléatoire.

6. Procédé selon une des revendications précédentes, dans lequel les règles de représentation sont conçues de manière à ce que la valeur anonymisée présente au moins une propriété prédéfinie de la valeur d'origine de l'élément de données.

7. Procédé selon une des revendications précédentes, dans lequel la valeur anonymisées est une suite de caractères d'une longueur qui se situe dans un rapport prédéfini par rapport à la longueur des suites de caractères constituant la valeur d'origine.

8. Procédé selon une des revendications précédentes, dans lequel une partie intégrante prédéfinie d'une suite de caractères constituant la valeur d'origine, en particulier un préfixe et/ou un suffixe, est intégrée dans la valeur anonymisée.

9. Procédé selon une des revendications précédentes, dans lequel la valeur d'origine provient d'une plage de valeurs prédéfinies, et la valeur anonymisée correspondante est sélectionnée en partant de la règle de représentation sélectionnée dans la même plage de valeurs.

10. Procédé selon une des revendications précédentes, dans lequel la valeur d'origine de l'élément de données apparaît précisément une fois au sein d'un groupe d'éléments de données, la valeur anonymisée déterminée sur la base de la règle de représentation apparaissant précisément une fois au sein d'un groupe d'éléments de données supplémentaire contenant des valeurs anonymisée et associé au groupe d'éléments de données.

11. Procédé selon une des revendications précédentes, dans lequel la valeur d'origine de l'élément de données et la valeur anonymisées sont des noms de personnes différents.

12. Programme informatique comportant un code de programme qui contient des instructions pour exécuter un procédé selon une des revendications précédentes si le code de programme est exécuté sur un processeur.

13. Système de mise à disposition d'une valeur anonymisée d'un élément de données sauvegardé dans une banque de données (11) d'un système de banque de données (10), l'élément de données faisant partie intégrante d'un jeu de données qui concerne une personne et qui contient en outre d'autres éléments de données qui ne sont pas anonymisés,
dans lequel, pour l'élément de données sauvegardé dans la banque de données (11), un élément de données supplémentaire peut être généré, et
le système étant conçu pour
définir la valeur anonymisée de l'élément de données à partir de la valeur d'origine en partant d'une règle de représentation enregistrée dans le système de banque de données (10) pour la détermination de valeurs anonymisées et sauvegarder la valeur anonymisée dans l'élément de données supplémentaire ; et
enregistrer l'élément de données supplémentaire dans le jeu de données et le mettre en lien avec l'élément de données supplémentaires de manière à ce que, sur la base de la réception d'une instruction d'intervention concernant l'élément de données qui est envoyée par un utilisateur relié au système de banque de données (10) de manière à ce que l'élément de données supplémentaire soit lu et que la valeur anonymisée qu'il contient puisse être transmise à l'utilisateur,
l'élément de données supplémentaire étant généré indépendamment de la réception d'une instruction d'intervention et sauvegardé avec la valeur anonymisée contenue dans la banque de données (11).

14. Système de banque de données (10), comprenant :
une banque de données (11) ;
un système selon la revendication 13 pour la mise à disposition d'une valeur anonymisée d'un élément de données sauvegardé dans la banque de données ; et
une unité de gestion (12) qui est conçue pour, sur la base de la réception d'une instruction d'intervention concernant l'élément de données d'un utilisateur, vérifier une autorisation de l'utilisateur pour un accès à la valeur d'origine de l'élément de données sur la base de données d'autorisation d'accès enregistrées dans le système de banque de données (10), et pour transmettre la valeur anonymisée à l'utilisateur si la vérification indique que l'utilisateur n'est pas autorisé à une intervention sur la valeur d'origine.
